# DEMANDE DE BREVET EUROPEEN

(11) **EP 1 936 980 A1**
(43) Date de publication de la demande: **25.06.2008**
(21) Numéro de dépôt: 07301706.3
(22) Date de dépôt: 19.12.2007
(51) Int. Cl.: H04N 7/16

(54) **Installation télécommandée**

(30) Priorité: 22.12.2006 FR 0655927
(71) Demandeur: Sagem Communications, 75015 Paris (FR)
(72) Inventeur: Morard, Jean Pierre, 75015 Paris (FR); Jeandeau, Jérôme, 95000 Cergy (FR)
(74) Mandataire: Schmit, Christian Norbert Marie

(57) **Abrégé**

Dans le cadre de l'accès au service de TV sur ligne téléphonique (ADSL ou Fibre Optique) dans une installation de type « media center » sur un micro-ordinateur relié a un décodeur IP, l'invention permet:
- de simplifier l'usage avec une seule télécommande. A l'aide du micro-ordinateur, on est capable de faire passer les commandes du décodeur via la connexion IP ;
- de passer de l'interface du micro-ordinateur à celle du décodeur et vice et versa toujours avec la même télécommande
- de profiter de la qualité de la connectique HDMI du décodeur en ce qui concerne le contenu audio-video pour les contenus visualisables à partir du décodeur. Typiquement, des signaux de télévision transmis sur ligne téléphonique (ADSL ou Fibre Optique) peuvent être reçus par le micro ordinateur ou le décodeur pour que celui-ci les décode et les fasse afficher sur le téléviseur, sans recourir à la télécommande du décodeur, et en tirant avantage des qualités de rendu audio-vidéo du décodeur numérique.

## Description

La présente invention a pour objet une installation télécommandée utilisable dans le cadre domestique. Le but de l'invention est de simplifier l'utilisation de différents appareils de visualisation mis à la disposition des utilisateurs dans une telle installation.

Il est connu, dans le domaine de la visualisation, notamment de la télévision, de disposer d'un certain nombre d'appareils dans une même pièce d'une maison, en général un salon. Ces appareils comportent normalement un écran d'un appareil de télévision. Cet appareil de télévision est relié typiquement a un décodeur d'images vidéo, lui même éventuellement relié à un décodeur d'abonné qui est par ailleurs relié à un modem. Différentes variantes de montage de ces appareils sont envisageables. Soit toutes les fonctions sont groupées en un seul appareil. Soit des fonctions de modem, de décodeur d'abonnés et de décodeur vidéo présentes dans un seul appareil sont séparées d'un autre appareil comportant les autres fonctions. Un ou plusieurs de ces appareils peuvent par ailleurs comporter des lecteurs ou des lecteurs enregistreurs de disque optique numérique ou de cassette audio-vidéo.

Il est par ailleurs connu que chaque appareil soit doté d'une télécommande permettant de le commander. La conséquence la plus immédiate de cette disparité des appareils, de leurs différents modes de connexion et de la multiplicité des télécommandes est que l'utilisateur est souvent perdu lorsqu'il cherche à prendre la main sur son installation. Ce dernier cherche de préférence à se familiariser avec une seule télécommande dont il aurait l'intention de connaître le fonctionnement par coeur.

Dans l'invention, pour résoudre ce problème, on prévoit de mettre tous ces appareils dans la dépendance d'un micro-ordinateur avec lequel l'interface de liaison est bien maîtrisée et avec lequel on cherche à gérer simplement toute l'installation.

Il est connu des installations où, en plus des équipements ci-dessus, un micro-ordinateur leur est connecté. Le but de cette connexion connue peut être soit de recevoir sur un écran du micro-ordinateur des images véhiculées par le modem et/ou le décodeur d'abonné et/ou le décodeur vidéo, soit d'afficher sur l'écran de télévision des signaux accessibles par le micro-ordinateur. Les signaux accessibles par le micro-ordinateur peuvent être des signaux de chaînes de télévision diffusées sur Internet et qui sont bien captés par les micro-ordinateurs et ce sont typiquement des photos ou des films disponibles sur un disque dur de la machine.

Les montages à micro-ordinateur actuellement utilisés pour ce type de représentation comportent normalement un câble de type VGA, reliant une sortie VGA du micro-ordinateur à une entrée VGA de l'écran du téléviseur. Une liaison de type VGA est une liaison analogique. Le fonctionnement ainsi mis à disposition présente l'inconvénient de détériorer la qualité du signal, notamment lorsque l'écran du téléviseur est un écran haute définition. En effet, le signal vidéo numérique reçu dans le décodeur ou plus généralement dans le micro-ordinateur est un signal numérique. Il est malheureusement transmis par ce dernier sur une ligne analogique et la qualité de l'image est nettement moins bonne.

A titre de perfectionnement, il existe des micro-ordinateurs dotés de carte graphique permettant de recevoir des flux audio-vidéo numériques et de les mettre à disposition sur un port numérique, typiquement de type HDMI. Cette solution résout le problème de la qualité d'image. Toutefois, elle nécessite la mise en place d'une carte graphique numérique dans le micro-ordinateur qui ne gère pas toujours la fonction audio par une carte son numérique. Cette carte graphique et cette carte son numérique sont en principe redondantes puisque les décodeurs vidéo normalement utilisés possèdent déjà ces fonctions. En outre, elles sont chères.

Le but de l'invention est notamment de permettre une visualisation en qualité haute définition sur l'écran du téléviseur de signaux reçus dans le décodeur vidéo et/ou d'abonné grâce à la télécommande du micro-ordinateur, sans ajouter par ailleurs d'équipement complémentaire dans le micro-ordinateur, donc avec un micro-ordinateur ayant une sortie Audio-Video (par exemple : carte graphique VGA/DVI/HDMI, carte son 5.1/6.2, etc ) de capacité inférieure en terme de qualité à celle de l'HDMI du décodeur.

Selon l'invention, ce problème est résolu en faisant utiliser, par le micro-ordinateur, des fonctions disponibles dans le décodeur vidéo qui par ailleurs est relié au téléviseur. A cette fin, le micro-ordinateur comporte un logiciel pour prendre la main sur le décodeur-vidéo. Ces deux éléments sont reliés entre eux par une ligne de transmission de commandes et de données quelconque, typiquement une ligne de type Ethernet ou tout autre type de liaison véhiculant des signaux au format IP. Une telle liaison est disponible sur une carte réseau montée dans tous les micro-ordinateurs actuels. Le décodeur vidéo est lui-même modifié pour comporter un sous programme d'accueil des commandes éditées par le micro-ordinateur. En agissant ainsi, on peut conserver la qualité audio-video numérique.

L'invention a donc pour objet une installation télécommandée comportant un décodeur de signaux de télévision, un téléviseur connecté au décodeur par une ligne de transmission de signaux numériques pour diffuser avec le téléviseur des images et/ou du son correspondant à des signaux décodés par le décodeur, et un micro-ordinateur dépourvu d'une carte graphique numérique supportant le HDMI mais reliable au téléviseur par une liaison de type VGA, DVI ou HDMI incomplète (typiquement sans l'audio ou par exemple ne gérant pas le format 1080p ou ne supportant pas les commandes CEC), caractérisée en ce qu'elle comporte une liaison de transmission de signaux numériques du micro-ordinateur au décodeur et, dans le micro-ordinateur, des logiciels et un périphérique pour télécommander le décodeur à partir du micro-ordinateur.

L'invention sera mieux comprise à la lecture de la description qui suit à l'examen des figures qui l'accompagnent. Celles-ci ne sont présentées qu'à titre indicatif et nullement limitatif de l'invention. Les figures montrent :
- Figure 1 : Une représentation schématique d'une installation télécommandée selon l'invention ;
- Figure 2 : Une représentation schématique du mode de fonctionnement de sous programmes supplémentaires montés dans le micro-ordinateur d'une part, et dans le décodeur-vidéo, d'autre part.

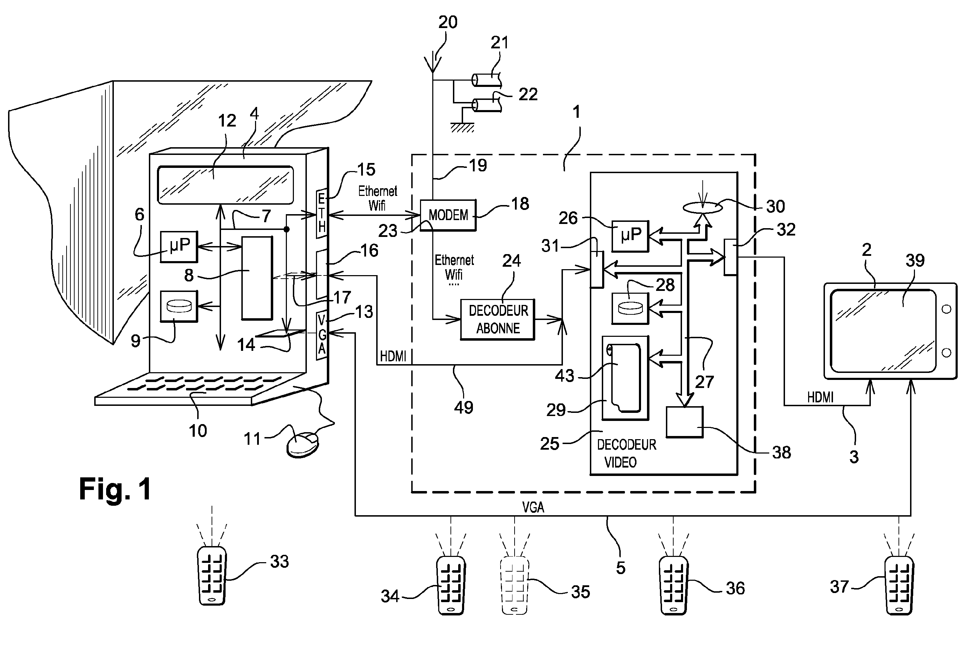

La figure 1 montre une installation télécommandée selon l'invention. Cette installation comporte un décodeur 1 de signaux de télévision, un écran d'un téléviseur 2 connecté au décodeur par une ligne 3 de transmission de signaux numériques. Dans un exemple, la ligne de transmission est de type HDMI. Le protocole HDMI (High Definition Multimedia Interface) est une interface audio/vidéo entièrement numérique à haute définition, capable de transmettre des flux non compressés. Le protocole HDMI fournit une interface entre n'importe qu'elle source émettrice de contenu audio/vidéo numérique compatible - comme un lecteur ou, un ordinateur ou une console de jeu - avec un récepteur compatible - tel qu'une télévision. Ce protocole est le remplaçant actuel numérique des anciennes normes analogiques comme la prise Péritel (SCART), ou la prise S-Vidéo.

Le protocole HDMI supporte la vidéo, incluant la définition standard, améliorée et haute définition ainsi que le son multi-canal et une interface de control CEC (Consumer Electronique Control) optionnel, le tout sur un seul câble. Il est indépendant des différentes normes de transmission de la télévision numérique comme la télévision numérique terrestre, ou la télévision numérique par satellite. Le protocole HDMI encapsule les données vidéo par TDMS, technologie qui permet la transmission en série de données à très haute vitesse. Au départ, le taux de transmission maximal était de 165Mpixel/s, suffisant pour assurer la résolution de 1080p à 60Hz ou de la norme UXGA (1600x1200), mais la norme HDMI 1.3 a permis d'augmenter la transmission jusqu'à 340Mpixel/s.

La norme HDMI permet aussi la transmission du son jusqu'à 8 canaux non compressés sur un taux d'échantillon de 192Khz avec 24bit/échantillon ainsi que le support de flux audio compressés selon le mode dit DTS ou dit Dolby numérique. Elle offre, de plus, un support du format Super Audio CD (SACD) avec des taux pouvant atteindre 4 fois le taux du SACD. La norme HDMI 1.3 apporte le support de flux audio de très haute qualité - sans perte de qualité.

Un connecteur HDMI standard de Type A comporte 19 broches, et une version de connecteur permettant une résolution supérieure appelé connecteur type B a aussi été définie. Le connecteur type B possède 29 broches lui permettant de supporter de très hautes résolutions pour les écrans à venir. Il est destiné aux résolutions supérieures à (3200x2048).

Le Type A est rétro-compatible avec le lien unique Single-link (DVI-D, DVI-I mais pas DVI-A) qui est largement utilisé dans les moniteurs d'ordinateurs et les cartes graphiques. Cela signifie qu'un émetteur utilisant la norme DVI-D peut diriger un écran à la norme HDMI - avec un adaptateur - et vice et versa, mais les caractéristiques en matière de transport audio et de contrôle à distance propres au HDMI ne peuvent être utilisées. De surcroît, sans le support du HDCP de l'émetteur et/ou du récepteur, l'utilisateur ne peut profiter de contenu protégé dans des conditions optimales. Le type B est, de manière similaire, rétro-compatible avec le Dual-link DVI. Le HDCP, High-Bandwidth Digital Content Protection exclusivement numérique, que l'on peut traduire en français par Protection des contenus numériques haute définition, est une spécification élaborée par Intel destinée à contrôler les flux audio et vidéo circulant à travers les interfaces DVI et HDMI, et à les protéger contre la copie.

L'installation comporte par ailleurs un micro-ordinateur 4 relié ou reliable, d'une manière classique par une liaison analogique 5 de type VGA. Le micro-ordinateur 4 comporte dans son principe un microprocesseur 6 relié par un bus 7 d'adresses de commandes et de données à une mémoire programme 8, une mémoire de masse 9 (typiquement un disque dur), un clavier 10, une souris 11, un écran 12 et un ensemble d'interfaces. Parmi les interfaces, on distingue une interface VGA connue 13, reliée à une carte graphique analogique 14, elle-même reliée au bus 7. Une autre interface 15 est une interface de type réseau, par exemple de type Ethernet ou USB. Elle possède typiquement un connecteur de type RJ45 ou USB. De préférence, mais pas nécessairement, le micro-ordinateur 4 comporte, dans l'ensemble d'interfaces, une interface 16 de type HDMI reliée au bus 7 sans que cette interface 16 soit reliée à une carte graphique numérique 17 absente. Au sens de l'invention, dépourvu de carte graphique numérique signifie aussi que, si une telle carte graphique numérique est présente, elle n'est pas utilisée au cours de la session commandée par le micro ordinateur pour traiter les images.

Le décodeur 1 comporte, quant à lui, un modem 18 relié à une source de données par un câble 19. Le modem 18 peut être de type ADSL ou Fibre. Le câble 19 peut être relié à un aérien 20 pour capter des émissions de télévision de type télévision numérique terrestre ou de type télédiffusion analogique. Eventuellement, le câble 19 peut être relié à un câble 21 de télédistribution de signaux de télévision, voire à une paire torsadée d'une ligne téléphonique 22, véhiculant des signaux de type ADSL. Le modem 18 est capable, sur sa sortie 23, de produire des signaux en bande de base transmis à un décodeur d'abonné. Un décodeur d'abonné est un décodeur qui vérifie l'état des droits d'un abonné à recevoir certain des signaux véhiculés par le câble 19. Parmi ces signaux, certains sont gratuits, notamment ceux véhiculés par la télévision numérique terrestre, tandis que d'autres sont soumis à un paiement d'abonnement et leur décodage peut n'être entrepris par la suite que si l'abonné est à jour du paiement de son abonnement. Le décodeur 24 d'abonné est lui-même relié à un décodeur-vidéo 25. Un tel décodeur vidéo 25 est de type MPEG ou HD dans la plupart des cas. Dans la pratique, le modem 18, le décodeur d'abonné 24 et le décodeur-vidéo 25 peuvent être réalisés dans un seul boîtier, ou dans deux, un modem jouant les rôles de modem-décodeur d'abonné, ou un décodeur jouant les rôles de décodeur d'abonné et de décodeur-vidéo.

Le décodeur-vidéo 25 possède une architecture du même type que le micro-ordinateur 4 avec un microprocesseur 26, relié par un bus 27 d'adresses, de données et de commandes, à une mémoire de masse 28 (typiquement un disque dur), une mémoire programme 29, voire un lecteur (éventuellement enregistreur) 30 de disque optique numérique. Le bus 27 est par ailleurs relié à un périphérique d'entrée 31 et un périphérique de sortie 32, encore que les fonctions entrée sortie peuvent être interverties, les appareils ayant maintenant tous des aptitudes à transmettre des signaux en duplex à ceux auxquels ils sont reliés.

Le téléviseur 2 est relié par le câble de type HDMI 3 à l'interface 32, alors que le décodeur 24, le modem 18, et l'interface 16 sont reliés au port 31, lui aussi de préférence HDMI. En pratique, chacun de ces appareils peut être muni d'une télécommande, respectivement 33 à 37. Le fonctionnement de ces télécommandes implique dans chaque appareil un détecteur tel que le détecteur 38 du décodeur-vidéo 25, relié au bus 27.

Le but de l'invention est de faire afficher sur l'écran 39 du téléviseur 2 d'une part, des indications bien maîtrisées correspondant à des commandes du micro-ordinateur 4 et d'autre part, les programmes de télévision ou à visualiser correspondant à l'exécution de ces commandes. Le micro-ordinateur 4 sera commandé à cet effet, soit à l'aide de la souris 11, soit à l'aide de sa propre télécommande 33.

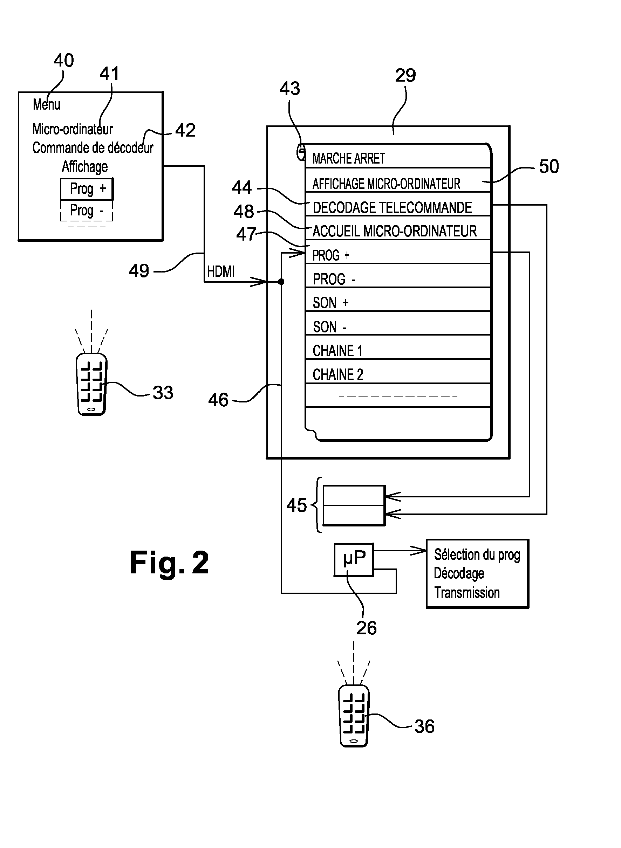

Le fonctionnement du système est le suivant. A l'aide de la télécommande 33, figure 2, on provoque sur l'écran 12 du micro-ordinateur 4 l'apparition d'un menu 40 comportant plusieurs rubriques. Par exemple, une rubrique 41 concerne la gestion du micro-ordinateur. Dans le cadre de l'invention, une rubrique 42 concerne la commande du décodeur 25. La rubrique 42 peut par ailleurs être présentée sous forme d'une icône sur l'écran 12. Une fois lancée l'application correspondant à la rubrique 42, l'écran 12 affiche un certain nombre de possibilités, notamment une possibilité dite Affichage, ayant pour objet de faire afficher sur l'écran 39 du téléviseur 2 des indications correspondant aux commandes passées ou à passer avec la télécommande 33. Le principe est donc, dans ce cas, de télécommander le micro-ordinateur 4, de lui faire télécommander le décodeur 1 et de voir sur l'écran 39, à titre d'écran déporté de l'écran 12, le menu désiré.

Ce fonctionnement sera expliqué en correspondance d'une des opérations effectuables à l'aide de la télécommande 36, propre au décodeur-vidéo 25. Cette télécommande 36 possède un certain nombre de boutons permettant de choisir dans un programme 43, contenu dans la mémoire programme 29, des instructions, de manière à ce que ces instructions soient exécutées par le décodeur 25. Par exemple, au moment de l'appui sur une touche de la télécommande 36, le détecteur 38 qui reçoit des signaux radioélectriques de télécommande provoque une interruption de niveau élevé des cycles gérés par le microprocesseur 26 de façon à ce que celui-ci aille sélectionner, dans le programme 43, une instruction 44 de décodage du signal de télécommande reçu. Cette instruction 44 est portée dans un registre instruction 45 du microprocesseur 26 qui décode l'instruction et produit un ordre correspondant.

Ici, dans le cas où la sélection d'une touche de la télécommande correspond à l'utilisation PROG + (il s'agit de rechercher un canal de diffusion dont le numéro est incrémenté de un par rapport à celui qui était actuellement visualisé), le microprocesseur 26 provoque la lecture, par un ordre 46, de l'instruction correspondant au signal de télécommande décodé, ici PROG +. Par microprocesseur 26, on comprend l'ensemble des microcircuits capables d'exécution.

Il est possible par ailleurs que la télécommande 36 et le lecteur 38 soient reliés à un automate de pointage direct sur les instructions utiles. En l'occurrence, l'ordre 46 peut être tout simplement une adresse de l'endroit où, dans la mémoire programme 29, se situe l'instruction PROG + qu'on cherche à faire exécuter.

En exécution de l'ordre 46, l'instruction 47 PROG + est lue dans la mémoire 29 et est portée à son tour dans le registre d'instruction 45. Au cycle de travail suivant du microprocesseur 26, cette instruction 47 PROG + est exécutée par le microprocesseur 26. Cette instruction PROG + peut comporter en elle-même plusieurs instructions. Elle peut comporter la sélection du programme suivant, typiquement un décalage d'un paramètre de décodage dans le flux vidéo, transmis à partir du modem 18 et du décodeur d'abonné 24. Elle peut comporter par ailleurs l'adaptation des paramètres des décodages à ce nouveau flux, ce nouveau flux pouvant être différent d'un flux précédent. Elle comporte par ailleurs la transmission du flux décodé au téléviseur 2 qui l'affiche sur l'écran 39.

Ce fonctionnement classique 46, 47 est remplacé dans l'invention par un couple d'instructions 48, 47. L'instruction 48 a pour objet de faire prélever l'ordre, non pas dans le détecteur 38 mais plutôt par l'interface 31 reliée par la liaison 49 HDMI (ou autre) au micro-ordinateur 4.

Deux fonctionnements sont possibles. Soit la liaison HDMI 49 permet de transmettre des ordres qui simulent le fonctionnement de la télécommande 36 (via le CEC), soit elle permet de simuler le fonctionnement du programme 43 en entier. Dans la deuxième solution, en application de l'instruction 48, le microprocesseur 26 charge, dans son registre instruction, des instructions provenant de la liaison 49, de préférence à celles provenant de la mémoire 29. Cette solution présente cependant la nécessité, pour un constructeur, de devoir mettre à disposition de tous les utilisateurs un programme exécutable comportant tout le fonctionnement de son décodeur-vidéo 25. Ce programme exécutable est celui qui doit être chargé au moment du lancement de la rubrique 42.

L'autre solution a pour objet de créer une indirection. Dans ce cas, l'instruction 48 Accueil micro-ordinateur a pour objet de remplacer les signaux reçus par le détecteur 38, par des signaux transmis par la liaison 49. Ceux-ci, quant à eux, peuvent également être décodés par le micro processeur 26, avant de détecter qu'il s'agit de faire exécuter l'instruction 47 concernée. Eventuellement, ils peuvent provoquer la lecture de l'instruction directement.

Parmi les différentes possibilités présentées, on a montré que les instructions pouvaient être de type PROG +, PROG - (on monte ou on descend dans la suite des programmes visualisables), SON + ou SON - (on monte ou on baisse le son), ou bien Chaîne 1, Chaîne 2 et ainsi de suite, avec lesquelles on peut aller directement à la chaîne n°1, à la chaîne n°2.

En agissant ainsi, le menu des opérations exécutées peut toujours être visible sur l'écran 12 du micro ordinateur, alors que les conséquences des choix effectués sont présentés sur l'écran 39 du téléviseur. Pour simplifier encore plus cette opération, on peut prévoir, dans le programme 43, une instruction 50, dite Affichage micro ordinateur, par laquelle l'image visible sur l'écran 12 est maintenant dupliquée sur l'écran 39 (voire supprimée de l'écran 12 pour n'être affichée que sur l'écran 39). Avec l'invention, par incrustation ou par commutation entre deux images, l'affichage du menu de commande du décodeur sur le téléviseur est donc possible.

De préférence, on prévoira même que cette instruction 50 est automatique et résulte de l'édition d'un signal quelconque de type HDMI sur la liaison 49. En effet, dans ce cas, on sait que le téléviseur 2 qui reçoit un signal HDMI bascule automatiquement sa réception sur un nouveau signal HDMI reçu. Autrement dit, au démarrage, l'instruction 50 est lancée par le micro ordinateur 4, en même temps que ce dernier transmet, sur le lien 49, les données relatives à cette image. L'instruction 50, décodée par le micro processeur 26, provoque l'affichage sur l'écran 39 des images provenant du décodeur 1. L'utilisateur peut ainsi, en tournant sa télécommande 33 vers le micro ordinateur 4, commander l'ensemble de l'installation en ne regardant plus que l'écran 39. Bien entendu, dans le micro-ordinateur 4, toute action sur la télécommande 33 a pour objet de modifier l'apparence du menu apparaissant sur l'écran 12 et/ou 39.

Selon l'invention, figure 2, toutes les instructions et tous les programmes contenus dans la mémoire 29 peuvent être dupliqués dans la mémoire 8. De préférence, chaque instruction de la mémoire 29 est associée à un pointeur, Ce pointage peut être sollicité par une instruction de pointage, mémorisée elle dans la mémoire 8. Les actions sur la télécommande 33 font alors transmettre ces instructions de pointage, qui elles-mêmes font exécuter l'instruction pointée dans la mémoire 29.

Deux situations se présentent. Soit, pour des opérations, comme vu jusqu'à présent, l'exécution immédiate de l'instruction est attendue. Il n'est donc pas nécessaire d'afficher sur l'écran 39 l'instruction PROG +. Il suffit que le programme suivant soit affiché, que la chaîne de télévision soit changée.

Par contre, s'agissant de l'utilisation plus complexe du décodeur 25 et/ou de la télévision 39, l'affichage du menu trouve toute son utilité. En effet, typiquement, pour des opérations d'enregistrement dans la mémoire 28 ou sur un disque optique numérique inséré dans le lecteur 30, ou pour la lecture d'un programme de télévision accessible dans ces périphériques, notamment lorsque ces opérations sont programmées dans le temps, ou retardées, il peut être utile de présenter un menu sur l'écran 39. Ce menu est présenté éventuellement en surimpression ou en transparence, avec des images déjà diffusées. En définitive, sur l'écran 12 (et par transmission sur l'écran 39) doivent être disponibles toutes les images de télécommande qu'il est possible d'effectuer avec le décodeur 25. A chaque image de menu, et à chaque sélection d'une option dans ces images de menu, correspond, dans la mémoire programme 8, d'une part, et dans la mémoire programme 29 d'autre part, des instructions émises par le micro-ordinateur 4, et décodées par le microprocesseur 26 du décodeur 25. Ces instructions correspondent au programme original contenu dans la mémoire 29. Un tel programme correspond à un fonctionnement sous le contrôle de la télécommande 36.

Le micro-ordinateur 4 a une sortie audio-video plus adapté au rendu d'interface utilisateur. Avec l'invention, il est notamment possible de recevoir dans le micro-ordinateur (provenant d'Internet) des programmes de télévision et de les visualiser sur l'écran 39. Dans ce cas, les signaux vidéo correspondants sont transmis par la liaison du module graphique et l'audio par la liaison du module audio. Un module pouvant être intégré dans le micro-ordinateur ou être un périphérique externe. Mais il permet aussi de regarder par exemple les chaînes de la Télévision Numérique Terrestre décodées dans le décodeur 25, et finalement affichés sur l'écran 39 grâce la liaison 49.

## Revendications

1. - Installation télécommandée comportant
- un décodeur (1) de signaux de télévision,
- un téléviseur (2) connecté au décodeur par une ligne (3) de transmission de signaux numériques pour diffuser avec le téléviseur des images et ou du son correspondant à des signaux décodés par le décodeur, et
- un micro-ordinateur (4) dépourvu d'une carte graphique numérique supportant le HDMI mais reliable au téléviseur par une liaison (5) analogique de type VGA, DVI ou HDMI incomplète,
**caractérisée en ce qu'**elle comporte
- une liaison (49, 3) de transmission de signaux numériques du micro-ordinateur au décodeur et,
- dans le micro-ordinateur, des logiciels (8) et un périphérique (41, 16, 33) pour télécommander le décodeur (25) à partir du micro-ordinateur, et
- un logiciel (42) pour faire afficher sur un écran du téléviseur une image d'un menu de commande du décodeur,
- un logiciel (17, 50) pour modifier un état de cette image en fonction d'une action sur le périphérique du micro-ordinateur, et
- un logiciel pour envoyer au décodeur un ordre de décodage correspondant.

2. - Installation selon la revendication 1, **caractérisée en ce que** la ligne de transmission de signaux numériques comporte un câble de type HDMI et dans le téléviseur et le décodeur un microprocesseur pour mettre en oeuvre un protocole HDMI et **en ce que** l'affichage sur l'écran du téléviseur est automatique et résulte de l'édition d'un signal quelconque de type HDMI sur la liaison.

3. - Installation selon l'une des revendications 1 à 2, **caractérisée en ce que** le décodeur comporte une liaison (19) à un organe de réception d'un signal audio vidéo numérique modulé en haute fréquence.

4. - Installation selon l'une des revendications 1 à 3, **caractérisée en ce que** le décodeur comporte un lecteur (30) de disques optiques numériques et ou un disque dur (28) et ou un lecteur de cassettes vidéo et ou un périphérique (31), de réception d'un signal audio vidéo numérique.

5. - Installation selon la revendication 4, **caractérisée en ce que** le périphérique de réception d'un signal audio vidéo numérique comporte un modem (18) ADSL (ou fibre) relié à un décodeur d'abonné.

6. - Installation selon l'une des revendications 1 à 5, **caractérisée en ce que** la liaison de transmission de signaux numériques du micro-ordinateur au décodeur est de type Ethernet, au format IP, et que le connecteur qui la reçoit est de type RJ45.
